# EUROPEAN PATENT APPLICATION

(11) **EP 2 600 174 A1**
(43) Date of publication of application: **05.06.2013**
(21) Application number: 12193229.7
(22) Date of filing: 19.11.2012
(51) Int. Cl.: G01S 19/20

(54) **Graphical presentation of receiver autonomous integrity monitoring outage regions on an aircraft display**

(30) Priority: 30.11.2011 US 201113307677
(71) Applicant: Honeywell International Inc., Morristown, NJ 07962-2245 (US)
(72) Inventor: Behara, Dilip Kumar, Morristown, NJ New Jersey 07962-2245 (US); Singh, Jayant Kumar, Morristown, NJ New Jersey 07962-2245 (US)
(74) Representative: Houghton, Mark Phillip

(57) **Abstract**

A system and related methods of displaying receiver autonomous integrity monitoring (RAIM) information on a display element of an aircraft are provided. The method obtains geographic position data for the aircraft, accesses lateral map data corresponding to the geographic position data, obtains RAIM outage data, and renders a dynamic lateral map on the display element. The map is rendered in accordance with the geographic position data, the lateral map data, and the RAIM outage data, and the map includes a graphical representation of a map and a graphical representation of a RAIM outage region.

## Description

### TECHNICAL FIELD

Embodiments of the subject matter described herein relate generally to display systems for vehicles such as aircraft. More particularly, embodiments of the subject matter relate to a navigation display, such as a moving lateral map, that includes visual representations of receiver autonomous integrity monitoring (RAIM) outage regions.

### BACKGROUND

Modem flight deck displays for vehicles (such as aircraft or spacecraft) display a considerable amount of information, such as vehicle position, speed, altitude, attitude, navigation, target, hazard, and terrain information. In the case of an aircraft, most modem displays additionally display a flight plan from different views, either a lateral view, a vertical view, or a perspective view, which can be displayed individually or simultaneously on the same display. For example, a dynamic lateral map presents a "top down" view of the aircraft during flight, typically along with a visual representation of the intended flight plan, geography, geographic boundaries, etc.

An aircraft may include an onboard global positioning system (GPS) as a navigation aid. RAIM is a technology that is used to assess the integrity of GPS signals provided by the constellation of GPS satellites. RAIM prediction refers to the prediction of which (if any) areas of airspace might be affected by GPS satellite failure, downtime, communication error, or the like. RAIM prediction techniques contemplate the constant motion of the GPS satellites, which impacts the regions of airspace that might have compromised GPS service at any given moment.

Aircraft that primarily depend on a GPS for navigation need to determine RAIM prior to departure. Indeed, the United States Federal Aviation Administration has certain regulations that mandate the monitoring of RAIM outages; in the event of a predicted, continuous loss of RAIM of more than five minutes for any part of the intended flight route, the flight should be delayed, canceled, or re-routed through airspace regions where RAIM requirements can be met.

Currently there is no cockpit display system that displays predicted RAIM outage information graphically for a particular area on a display map or on an electronic flight bag. Instead, pilots typically rely on printed information and/or websites that display RAIM outage data without any reference to a particular flight plan or operating status of the aircraft.

Accordingly, it is desirable to have a display system for an aircraft that graphically presents a lateral map view along with RAIM outage regions in an intuitive and easy to understand manner. In addition, it is desirable to deploy such a display system onboard the aircraft such that RAIM prediction can be achieved continuously during flight. Furthermore, other desirable features and characteristics will become apparent from the subsequent detailed description and the appended claims, taken in conjunction with the accompanying drawings and the foregoing technical field and background.

### BRIEF SUMMARY

An exemplary embodiment of a method of displaying RAIM information on a display element of an aircraft is provided. The method begins by obtaining geographic position data for the aircraft. The method continues by accessing lateral map data corresponding to the geographic position data, obtaining RAIM outage data, and rendering a dynamic lateral map on the display element. The dynamic lateral map is rendered in accordance with the geographic position data, the lateral map data, and the RAIM outage data. The dynamic lateral map includes a graphical representation of a map and a graphical representation of a RAIM outage region.

Another embodiment of a method of displaying RAIM information on a display element of an aircraft is also provided. The method displays a dynamic moving lateral map comprising a graphical representation of the aircraft, a graphical representation of a flight plan of the aircraft, and a graphical representation of geographic indicia. The method continues by obtaining RAIM outage data, processing the RAIM outage data to identify a RAIM outage region, and displaying a graphical representation of the RAIM outage region on the dynamic moving lateral map in a conformal manner relative to the graphical representation of the geographic indicia.

An exemplary embodiment of a display system for an aircraft is also provided. The display system includes a source of aircraft status data for the aircraft, a source of RAIM data, wherein the RAIM data is indicative of a RAIM outage region, and a source of geographic map data. The system also includes a processor operatively coupled to the source of aircraft status data, to the source of RAIM data, and to the source of geographic map data. The processor is configured to obtain and process the aircraft status data, the RAIM data, and the geographic data to generate image rendering display commands based upon the aircraft status data, the RAIM data, and the geographic map data. The system also includes a display element coupled to the processor and configured to receive the image rendering display command and, in response thereto, to render a dynamic moving lateral map that comprises a graphical representation of the geographic map data and a graphical representation of a RAIM outage region. The graphical representation of the geographic map data and the graphical representation of the RAIM outage region are rendered in a conformal manner relative to one another.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a schematic representation of an aircraft operating in conjunction with GPS satellites to receive GPS signals;

FIG. 2 is a schematic representation of an exemplary embodiment of a display system suitable for use with an aircraft;

FIG. 3 is a flow chart that illustrates an exemplary embodiment of a RAIM outage display process;

FIG. 4 is a graphical representation of an exemplary lateral map display having rendered thereon RAIM outage regions; and

FIG. 5 is a graphical representation of another exemplary lateral map display having rendered thereon a flight plan encountering RAIM outage.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The system and methods described herein can be deployed with any vehicle having an associated display system. The exemplary embodiment described herein assumes that the vehicle is an aircraft having an onboard GPS that is used as a navigation aid. In this context, the display system may be implemented as an onboard flight deck system, as a portable computer, as an electronic flight bag, or any combination thereof. For the sake of brevity, conventional techniques related to graphics and image processing, navigation, flight planning, aircraft controls, aircraft data communication systems, GPS, RAIM prediction, and other functional aspects of certain systems and subsystems (and the individual operating components thereof) may not be described in detail herein.

Area Navigation (RNAV) is a method of navigation that permits aircraft operation on any desired flight path. With the advancement in GPS and inertial navigation technology, an aircraft using RNAV can determine its three dimensional position in airspace using a GPS and/or inertial navigation sensors. GPS based navigation differs from traditional navigation systems because the GPS satellites and corresponding areas of adequate/degraded coverage are in constant motion. Therefore, if a GPS satellite fails or is taken out of service for maintenance, it is not immediately known which areas of airspace will be affected, if any. To address this issue, RAIM techniques provide integrity monitoring of the GPS signals. RAIM is a form of integrity monitoring performed within GPS receivers. In this context, a "RAIM outage" refers to an actual or predicted loss of GPS navigation coverage, or an actual or predicted degradation in GPS navigation coverage. By comparing the pseudo range measurements of a number of GPS satellites, the RAIM function can identify a satellite failure (or any type of downtime or signal degradation).

Aircraft depending primarily on GPS (without any augmentation) for position information may be required to determine RAIM outages prior to departure. In the exemplary embodiments described here, the location and duration of these outages can be predicted with the aid of computer analysis tools, and can be displayed on a cockpit display element, such as a dynamic moving lateral map (which may be provided as part of a multifunction navigation display). The display of RAIM outages in conjunction with a lateral map is useful for purposes of pre-flight planning. Moreover, RAIM outage prediction can be performed in real-time during flight to further help the pilot in deciding whether or not to fly a given course, or to switch to a different mode of navigation in the event of a predicted RAIM outage. In practice, the display of predicted RAIM outages graphically over a navigation map will help the flight crew during pre-flight planning, during the flight, and during approach. The graphical representation of RAIM outage regions on a moving lateral map provides the flight crew with RAIM outage information in a non-numeric and intuitive manner.

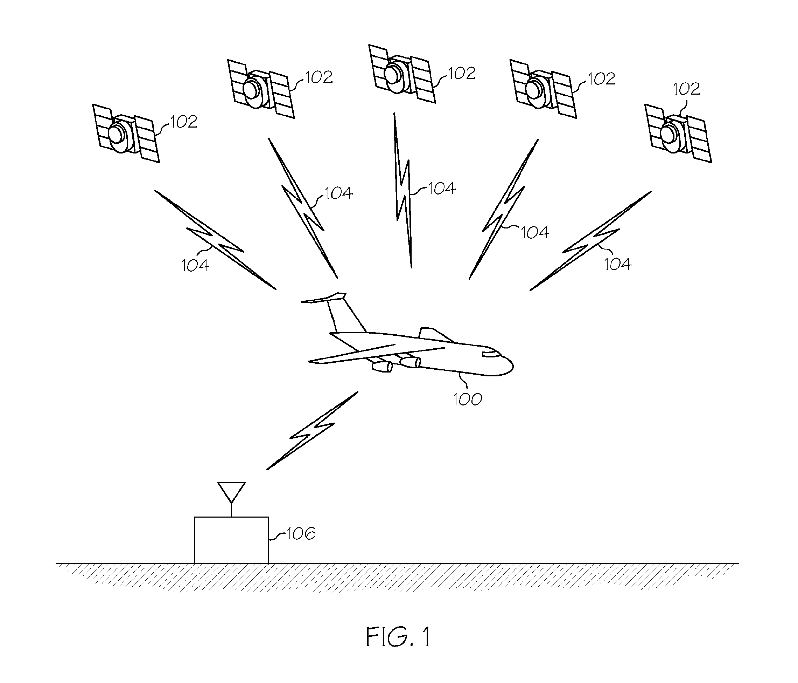

Referring now to the drawings, FIG. 1 is a schematic representation of an aircraft 100 operating in conjunction with GPS satellites 102 to receive GPS signals 104. Although only five GPS satellites 102 are depicted, it is well understood that the constellation of orbiting GPS satellites 102 includes more than twenty (usually 24 to 32 satellites). The GPS signals 104 convey information and data that can be received and processed by a GPS receiver onboard the aircraft 100. In accordance with established GPS technology, each GPS signal 104 conveys navigation messages, which in turn convey the following information: satellite clock (related to GPS timing); ephemeris (related to satellite orbit); and almanac (related to satellite network status, diagnostics, and error correction).

The onboard GPS receiver (not shown in FIG. 1) receives and processes the GPS signals 104 for navigational purposes using any number of established GPS methodologies, techniques, and technologies. In certain exemplary embodiments, the onboard GPS receiver obtains and processes the almanac data from one or more of the GPS satellites 102 for purposes of RAIM. In this regard, current and future RAIM outages can be predicted by an onboard subsystem or processing module of the aircraft 100. As described in more detail below, the predicted RAIM outage regions can be visually presented in a graphical manner on a dynamic moving lateral map rendered on a display element (e.g., a flight deck display, an electronic flight bag display, or the like).

FIG. 1 also schematically depicts a ground station 106 that is configured to communicate with the aircraft 100. It should be appreciated that more than one ground station 106 could be deployed (located in different geographic areas) to accommodate data communication with the aircraft 100 as it travels across the airspace. The ground station 106 could be utilized to provide RAIM information (e.g., data that indicates predicted current RAIM outages and/or predicted future RAIM outages) to the aircraft 100. As one non-limiting example, the ground station 106 could be configured to transmit RAIM related data to the aircraft using data link technology.

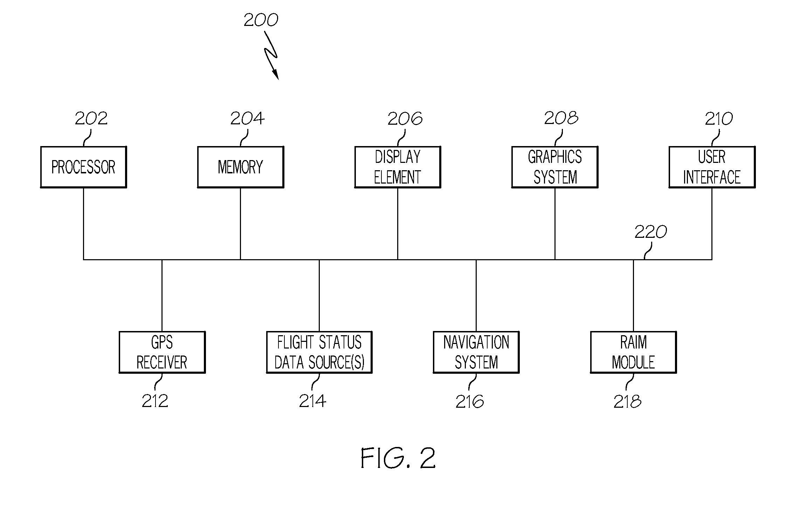

FIG. 2 is a schematic representation of an exemplary embodiment of a display system 200 suitable for use with an aircraft (such as the aircraft 100 shown in FIG. 1). Although not always required, the following description assumes that the display system 200 is an onboard subsystem of the aircraft. More specifically, an exemplary embodiment of the display system 200 is implemented as an onboard flight deck display system. Accordingly, in exemplary embodiments, the various components and elements of the display system 200 reside within the host aircraft, are carried by the host aircraft, or are attached to the host aircraft. The illustrated embodiment of the display system 200 includes, without limitation: at least one processor 202; an appropriate amount of memory 204; a display element 206; a graphics system 208; a user interface 210; a GPS receiver 212; at least one source of flight status data 214; a navigation system 216; and a RAIM module 218. These elements of the display system 200 may be coupled together by a suitable interconnection architecture 220 that accommodates data communication, the transmission of control or command signals, and/or the delivery of operating power within the display system 200. It should be understood that FIG. 2 is a simplified representation of the display system 200 that will be used for purposes of explanation and ease of description, and that FIG. 2 is not intended to limit the application or scope of the subject matter in any way. In practice, the display system 200 and the host aircraft will include other devices and components for providing additional functions and features, as appropriate for the particular embodiment. Furthermore, although FIG. 2 depicts the display system 200 as a single unit, the individual elements and components of the display system 200 could be implemented in a distributed manner using any number of physically distinct pieces of hardware or equipment.

The processor 202 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described here. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. As described in more detail below, the processor 202 and/or the RAIM module 218 could be utilized to obtain and/or process aircraft status data, RAIM data, and geographic map data for purposes of generating image rendering display commands for the display element 206. The display commands enable the display element 206 to render RAIM outage regions on a dynamic moving lateral map having the characteristics described herein.

The memory 204 may be realized as RAM memory, flash memory, EPROM memory, EEPROM memory, registers, a hard disk, a removable disk, a CD-ROM, or any other form of storage medium known in the art. In this regard, the memory 204 can be coupled to the processor 202 such that the processor 202 can read information from, and write information to, the memory 204. In the alternative, the memory 204 may be integral to the processor 202. As an example, the processor 202 and the memory 204 may reside in an ASIC. In practice, a functional or logical module/component of the display system 200 might be realized using program code that is maintained in the memory 204. For example, the graphics system 208, the navigation system 216, or the RAIM module 218 may have associated software program components that are stored in the memory 204. Moreover, the memory 204 can be used to store data utilized to support the operation of the display system 200, as will become apparent from the following description. For example, the memory 204 could be used to store terrain data, map data, waypoint data, flight plan data, and/or other information for purposes of rendering features on the dynamic lateral display.

In an exemplary embodiment, the display element 206 is coupled to the graphics system 208. The graphics system 208 is coupled to the processor 202 such that the processor 202 and the graphics system 208 cooperate to display, render, or otherwise convey one or more graphical representations, synthetic displays, graphical icons, GUI elements, visual symbology, or images associated with operation of the host aircraft on the display element 206, as described in greater detail below. An embodiment of the display system 200 may utilize existing graphics processing techniques and technologies in conjunction with the graphics system 208. For example, the graphics system 208 may be suitably configured to support well known graphics technologies such as, without limitation, VGA, SVGA, UVGA, or the like.

In an exemplary embodiment, the display element 206 is realized as an electronic display configured to graphically display flight information, geographic map information, RAIM outage regions, or other data associated with operation of the host aircraft under control of the graphics system 208. The display element 206 is usually located within a cockpit of the host aircraft. The display element 206 could also be implemented as a virtual display of the type used with head up display technology. Moreover, the display element 206 could be integrated in equipment worn or carried by the user, e.g., a display mounted to eyewear, headwear, or the like. In practice, the processor 202 and/or the graphics system 208 produces image rendering display commands that are received by the display element 206 for purposes of rendering dynamic moving lateral map displays. It will be appreciated that although FIG. 2 shows a single display element 206, in practice, additional cooperating display devices may be present onboard the host aircraft.

The illustrated embodiment of the display system 200 includes a user interface 210, which is suitably configured to receive input from a user (e.g., a pilot) and, in response to user-entered data, supply appropriate command, control, or instruction signals to the processor 202. The user interface 210 may be any one, or any combination, of various known user interface devices or technologies, including, but not limited to: a cursor control device such as a mouse, a trackball, or joystick; a keyboard; buttons; switches; or knobs. Moreover, the user interface 210 may cooperate with the display element 206 and the graphics system 208 to provide a GUI. In other words, the user interface 210 could be implemented as a GUI rendered on the display element 206. In certain embodiments, the display element 206 implements touch-sensitive technology for purposes of the user interface 210. Thus, a user can manipulate the user interface 210 by moving a cursor symbol rendered on the display element 206 and/or by physically interacting with the display element 206 itself, and the user may use a keyboard to, among other things, input textual data. For example, the user could manipulate the user interface 210 to show or hide RAIM outage regions, to select waypoints for purposes of changing a flight plan, to zoom in or out of the lateral map display, to move or select the center of the lateral map display, or the like.

The GPS receiver 212 may be configured in accordance with well established GPS technology and, therefore, the GPS receiver 212 will not be described in detail here. The GPS receiver 212 is generally configured to receive GPS data from one or more GPS satellites. As mentioned above, the received GPS data may convey GPS almanac data that in turn is processed or analyzed to obtain RAIM data suitable for use by the display system 200. In this context, therefore, the GPS receiver 212 may be considered to be a source of RAIM data for the display system 200. Although not depicted in FIG. 2, the display system 200 may also include or cooperate with a data communication module to support data communication between the host aircraft and one or more remote systems, such as ground stations that provide RAIM outage data, or the like.

In operation, the display system 200 also processes the current flight status data of the host aircraft. In this regard, the sources of flight status data 214 generate, measure, and/or provide different types of data related to the operational status of the host aircraft, the environment in which the host aircraft is operating, flight parameters, and the like. Thus, the sources of flight status data 214 represent instrumentation that obtains aircraft data used by the display system 200. In practice, the sources of flight status data 214 may be realized using line replaceable units (LRUs), transducers, accelerometers, instruments, sensors, and other well known devices. The data provided by the sources of flight status data 214 may include, without limitation: airspeed data; groundspeed data; altitude data; attitude data, including pitch data and roll data; yaw data; geographic position data, such as GPS data provided by the GPS receiver 212; time/date information; heading information; weather information; flight path data; track data; radar altitude data; geometric altitude data; wind speed data; wind direction data; etc. The display system 200 is suitably designed to process data obtained from the sources of flight status data 214 in the manner described in more detail herein. In particular, the display system 200 can use the flight status data of the host aircraft when rendering the dynamic lateral map display in real-time to reflect the current geographic position, heading, and flight plan of the aircraft.

The navigation system 216 is used, among other things, to allow the user to program a flight plan from one destination to another. The navigation system 216 may also be utilized to automatically fly, or assist the pilot in flying, the programmed route. For this particular embodiment, the navigation system 216 is in operable communication with various databases (including, for example, a navigation database, a terrain database and/or a geographic map database) that serve as sources of data to be used for purposes of rendering displays.

The RAIM module 218 represents hardware, software, firmware, and/or processing logic that is configured to perform various operations, calculations, data analysis, and other functions associated with RAIM. For example, the RAIM module 218 may be configured to obtain GPS data (e.g., GPS almanac data) from the GPS receiver 212, and to process the GPS data in accordance with a RAIM prediction function or methodology to obtain predicted RAIM outage regions (either current outage regions or future outage regions). It should be appreciated that any existing, established, or published RAIM prediction technique, function, algorithm, or methodology could be utilized with the RAIM module 218. Accordingly, the particular functionality of the RAIM module 218 and the specific manner in which it processes RAIM related data and information to obtain RAIM outage regions will not be described in detail here.

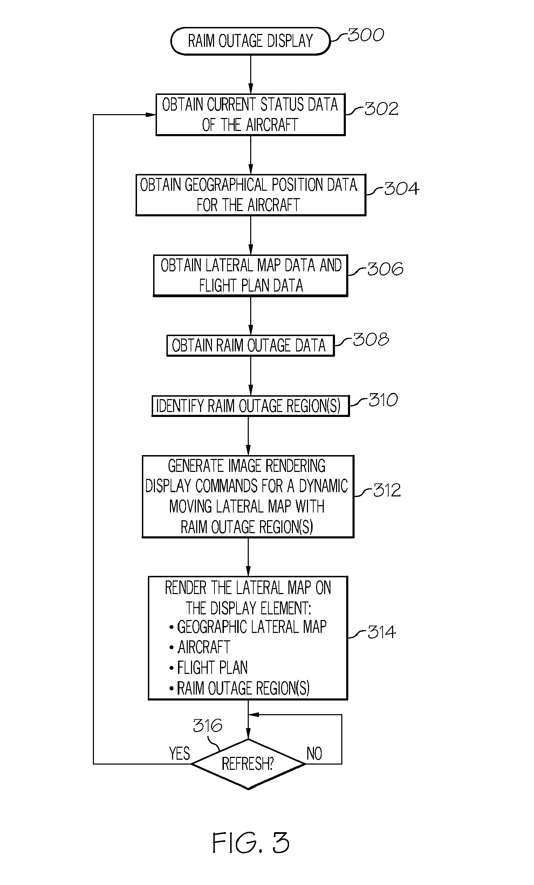

In operation, the display system 200 processes the current aircraft status data, the RAIM data (which may be received by the aircraft or generated by the aircraft), geographic map data, and other information if needed to generate corresponding image rendering display commands that cause the display element 206 to render a dynamically updated moving lateral map. The lateral map includes graphical representations of various elements, such as, without limitation: a geographic map that is refreshed to accurately reflect the current geographic position of the aircraft; one or more RAIM outage regions; the flight plan; geographic boundaries; photographic or synthetic terrain; etc. In this regard, FIG. 3 is a flow chart that illustrates an exemplary embodiment of a RAIM outage display process 300, which may be performed by the display system 200. The various tasks performed in connection with the process 300 may be performed by software, hardware, firmware, or any combination thereof. For illustrative purposes, the following description of the process 300 may refer to elements mentioned above in connection with FIG. 1 and FIG. 2. In practice, portions of the process 300 may be performed by different elements of the described system, e.g., a GPS receiver, a processor, or a display element. It should be appreciated that the process 300 may include any number of additional or alternative tasks, the tasks shown in FIG. 3 need not be performed in the illustrated order, and the process 300 may be incorporated into a more comprehensive procedure or process having additional functionality not described in detail herein. Moreover, one or more of the tasks shown in FIG. 3 could be omitted from an embodiment of the process 300 as long as the intended overall functionality remains intact.

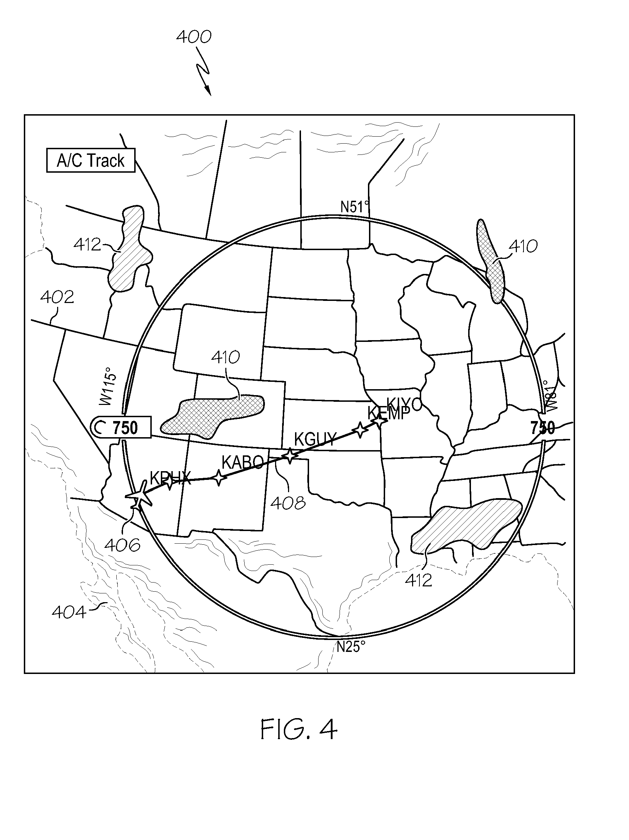

During operation of the host aircraft, the process 300 can be performed in a virtually continuous manner at a relatively high refresh rate. For example, an iteration of the process 300 could be performed once every two seconds (or less) such that the displays are updated in real-time or substantially real time in a dynamic manner during operation of the aircraft. This particular embodiment of the process 300 begins by obtaining the current flight status data of the host aircraft (task 302) and current geographic position data for the aircraft (task 304). The process 300 may also obtain, retrieve, or access lateral map data and flight plan data for the aircraft (task 306) that corresponds to or is otherwise associated with the current geographic position data. Thus, the amount of lateral map data accessed during task 306 and the geographic boundary associated with the accessed lateral map data can be influenced/determined by the current geographic position of the aircraft and the selected range of the lateral map. Likewise, the portion of the flight plan data accessed during task 306 may be influenced/determined by the current geographic position of the aircraft and the selected range of the lateral map. In this regard, the range is the extent of the geographical map areas the pilot would like to view. For example, referring to FIG. 4, a range circle is identified by the number 750, which represents the selected range in nautical miles relative to the center of the displayed map. This exemplary embodiment of the process 300 obtains RAIM outage data (task 308) that is associated with predicted current RAIM outage regions (if any) and predicted future RAIM outage regions (if any).

In certain embodiments, task 308 is related to the receipt and processing of GPS almanac data onboard the host aircraft. In this regard, the process 300 may fulfill task 308 by receiving GPS data from a plurality of GPS satellites and by processing the received GPS data to obtain the RAIM outage data. The resulting RAIM outage data may be indicative of one or more current RAIM outages, one or more future RAIM outages, or no predicted RAIM outages (current or future), depending upon the current status and operating health of the GPS satellites, the integrity of the GPS signals, etc. This example assumes that at least one current RAIM outage and at least one future RAIM outage has been predicted. Accordingly, the process 300 identifies RAIM outage regions that correspond to the predicted RAIM outages (task 310). In practice, the GPS almanac data can be processed to identify the RAIM outage regions using established methodologies.

The display system is operated to render RAIM outage regions in a conformal manner along with the dynamic moving lateral map. Accordingly, the process 300 may utilize the identified RAIM outage regions, the current geographic position data, geographic map data, terrain data, (and other information if needed or desired) when generating image rendering display commands corresponding to the desired state of the lateral display (task 312). The image rendering display commands are then used to control the rendering and display of the dynamic moving lateral map on the display element (task 314). For this example, task 314 renders the dynamic moving lateral map in accordance with the current geographic position data of the host aircraft, the lateral map data, the RAIM outage data, the flight plan data, etc. As explained in more detail below with reference to FIG. 4, the graphical representation of the lateral map might include graphical features corresponding to geographic map boundaries, terrain, the aircraft, the flight plan, waypoints, RAIM outage regions, and the like. Notably, the dynamic lateral map is preferably rendered in a conformal manner such that the graphical representation of the map and the graphical representation of the RAIM outage regions are scaled appropriately and "move" in a conformal manner relative to one another. In certain embodiments, the image rendering display commands may also be used to control the rendering of additional graphical features, such as flight instrumentation symbology, flight data symbology, alert messages, or the like.

If it is time to refresh the display (query task 316), then the process 300 leads back to task 302 to obtain updated input data. If not, then the current state of the lateral display is maintained. The relatively high refresh rate of the process 300 results in a relatively seamless and immediate updating of the display. Thus, the process 300 is iteratively repeated to update the graphical representation of the lateral map and RAIM outage regions. In practice, the process 300 can be repeated indefinitely and at any practical rate to support continuous and dynamic updating and refreshing of the display in real-time or virtually real-time as perceived by the viewer. Frequent updating of the displays enables the flight crew to obtain and respond to the current operating situation in virtually real-time.

FIG. 4 is a graphical representation of an exemplary lateral map display 400 having rendered thereon RAIM outage regions. The lateral map display 400 generally includes, without limitation, graphical representations of the following elements, features, or information: a top-down view of a geographic map 402; terrain 404; the host aircraft 406; the flight plan 408; and predicted RAIM outage regions. This particular example includes two current RAIM outage regions 410 and two future RAIM outage regions 412. The lateral map display 400 may also include other graphical indicia such as waypoint markers (not labeled), a distance circle (not labeled), active user interface elements, alphanumeric fields to present flight status data, etc. FIG. 4 depicts the lateral map display 400 centered about a selected waypoint or other geographic location. It should be appreciated that the lateral map display 400 could be switched to be centered on the aircraft 406, on a different waypoint, or on any other chosen point if so desired.

The geographic map 402 includes geographic indicia such as state boundaries (as shown), country boundaries, county boundaries, city boundaries, time zone boundaries, or the like. In this regard, the geographic map 402 can be rendered as a conformal overlay or otherwise superimposed overlying the visual representation of the terrain 404 in a conformal manner. The various RAIM outage regions 410, 412 are also rendered in a conformal manner relative to the geographic map 402 and the terrain 404. Consequently, the geographic map 402, the terrain 404, and the RAIM outage regions 410, 412 can dynamically move or shift as the aircraft travels along its flight path.

The current RAIM outage regions 410 are associated with current RAIM outages corresponding to the respective geographic regions or areas that are obscured by the displayed current RAIM outage regions 410. Likewise, the future RAIM outage regions 412 are associated with predicted future RAIM outages corresponding to the respective geographic regions or areas that are obscured by the displayed future RAIM outage regions 412. Accordingly, the pilot and flight crew can quickly and easily determine which regions (if any) to avoid at the present time, i.e., which regions are experiencing current RAIM outages. Similarly, the pilot and flight crew can quickly and easily determine which regions (if any) to avoid in the near or distant future, i.e., which regions might be experiencing RAIM outages in the future.

In preferred embodiments, the display system will render graphical representations of current RAIM outage regions with visually distinguishable characteristics, relative to graphical representations of future RAIM outage regions. The use of different visual characteristics enables the pilot and flight crew to quickly and intuitively determine which RAIM outage regions represent current outages, and which represent predicted future outages. In practice, the different visually distinguishable characteristics may correspond to any of the following characteristics, individually or in any combination thereof: different colors; different brightness; different transparency levels; different translucency levels; different line patterns; different line thickness; different fill pattern shapes; different flicker patterns; different focus levels; different sharpness levels; and different clarity levels. In certain embodiments, for example, graphical representations of current RAIM outage regions are rendered in a first color (such as red), and graphical representations of future RAIM outage regions are rendered in a different and distinctive color (such as yellow or amber).

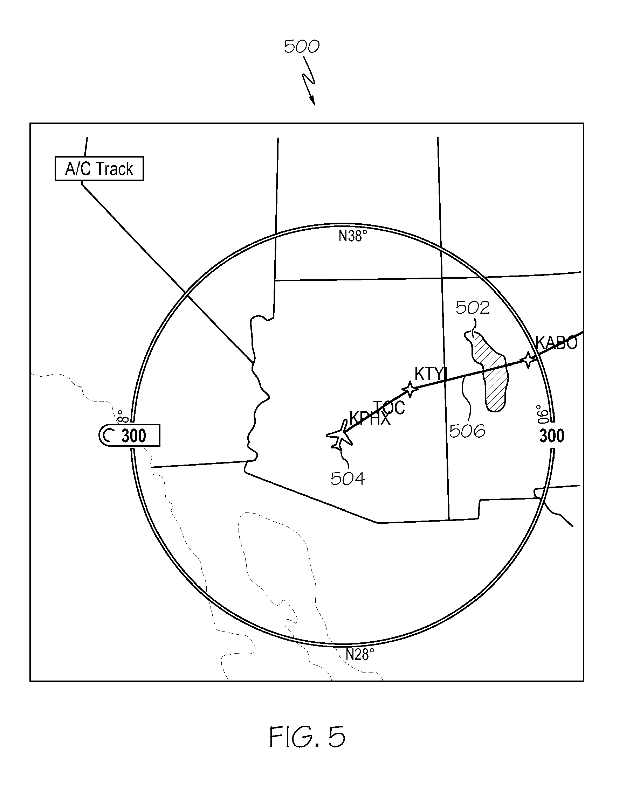

FIG. 5 is a graphical representation of an exemplary lateral map display 500 having rendered thereon a RAIM outage region 502. The lateral map display 500 is centered on the host aircraft 504 (in contrast to the lateral map display 400 shown in FIG. 4). Moreover, the scale of the geographic map and underlying terrain is different than that used for the lateral map display 400 of FIG. 4. FIG. 5 depicts a scenario where the desired flight path 506 enters the RAIM outage region 502. This visual cue informs the pilot and flight crew that the present flight path 506 should be avoided. In certain embodiments, the system detects when the current flight path 506 will cross (or be within close proximity of) a RAIM outage region and, in response to the detection, generate an appropriate alert, alarm, message, or notification to inform the pilot and flight crew of the approaching RAIM outage. At that time, the pilot and flight crew can determine how best to react to the situation, e.g., choose a different route, navigate to a different waypoint, switch to non-GPS navigation tools, or the like.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method of displaying receiver autonomous integrity monitoring (RAIM) information on a display element of an aircraft, the method comprising:
obtaining geographic position data for the aircraft;
accessing lateral map data corresponding to the geographic position data;
obtaining RAIM outage data; and
rendering a dynamic lateral map on the display element, the dynamic lateral map being rendered in accordance with the geographic position data, the lateral map data, and the RAIM outage data;
wherein the dynamic lateral map comprises a graphical representation of a map and a graphical representation of a RAIM outage region.

2. The method of claim 1, wherein:
the RAIM outage data is indicative of a current RAIM outage; and
the graphical representation of the RAIM outage region corresponds to the current RAIM outage.

3. The method of claim 1, wherein:
the RAIM outage data is indicative of a predicted future RAIM outage; and
the graphical representation of the RAIM outage region corresponds to the predicted future RAIM outage.

4. The method of claim 1, further comprising obtaining flight plan data for the aircraft, wherein:
the dynamic lateral map is rendered in accordance with the flight plan data; and
the dynamic lateral map comprises a graphical representation of the flight plan.

5. The method of claim 1, wherein:
the RAIM outage data is indicative of a current RAIM outage associated with a first geographic region and a predicted future RAIM outage associated with a second geographic region; and
the dynamic lateral map comprises a graphical representation of the current RAIM outage and a graphical representation of the predicted future RAIM outage.

6. The method of claim 5, wherein rendering the dynamic lateral map comprises:
rendering the graphical representation of the current RAIM outage with a first visually distinguishable characteristic; and
rendering the graphical representation of the predicted future RAIM outage with a second visually distinguishable characteristic.

7. The method of claim 6, wherein:
the first visually distinguishable characteristic comprises a first color; and
the second visually distinguishable characteristic comprises a second color.

8. The method of claim 1, wherein obtaining RAIM outage data comprises:
receiving, at a global positioning system (GPS) receiver onboard the aircraft, GPS data from a plurality of GPS satellites; and
processing the received GPS data to obtain the RAIM outage data.

9. The method of claim 1, wherein rendering the dynamic lateral map comprises rendering the graphical representation of the map and the graphical representation of the RAIM outage region in a conformal manner relative to one another.

10. A display system for an aircraft, the display system comprising:
a source of aircraft status data for the aircraft;
a source of receiver autonomous integrity monitoring (RAIM) data, wherein the RAIM data is indicative of a RAIM outage region;
a source of geographic map data;
a processor operatively coupled to the source of aircraft status data, to the source of RAIM data, and to the source of geographic map data, wherein the processor is configured to obtain and process the aircraft status data, the RAIM data, and the geographic data to generate image rendering display commands based upon the aircraft status data, the RAIM data, and the geographic map data; and
a display element coupled to the processor and configured to receive the image rendering display command and, in response thereto, to render a dynamic moving lateral map that comprises a graphical representation of the geographic map data and a graphical representation of a RAIM outage region, wherein the graphical representation of the geographic map data and the graphical representation of the RAIM outage region are rendered in a conformal manner relative to one another.

11. The system of claim 10, wherein the display element is a flight deck display onboard the aircraft.

12. The system of claim 10, wherein:
the source of RAIM data comprises a global positioning system (GPS) receiver onboard the aircraft; and
the GPS receiver receives GPS data from a plurality of GPS satellites.
